(19) Europäisches Patentamt
European Patent Office
Office européen des brevets

(11) EP 0 779 890 B1

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(21) Anmeldenummer: **96922748.7**

(22) Anmeldetag: **05.07.1996**

(51) Int Cl.[7]: **C07F 7/08**, C07F 7/10, C07F 7/12, C07F 7/18, C08G 77/58

(86) Internationale Anmeldenummer:
**PCT/DE96/01217**

(87) Internationale Veröffentlichungsnummer:
**WO 97/02270 (23.01.1997 Gazette 1997/05)**

(54) **THIOLSILANE, VERFAHREN ZU DEREN HERSTELLUNG UND DEREN VERWENDUNG**

THIOSILANES, PROCESS FOR THEIR PREPARATION, AND THEIR USE

THIOLISANES, LEUR PROCEDE DE PRODUCTION ET LEUR UTILISATION

(84) Benannte Vertragsstaaten:
**AT BE CH DE DK FR GB IT LI LU NL SE**

(30) Priorität: **06.07.1995 DE 19524657**

(43) Veröffentlichungstag der Anmeldung:
**25.06.1997 Patentblatt 1997/26**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **WOLTER, Herbert**
  **D-97950 Grossrinderfeld (DE)**
- **STORCH, Werner**
  **D-97204 Höchberg (DE)**

(56) Entgegenhaltungen:
**EP-A- 0 592 934**
**DE-A- 3 714 763**
**DE-A- 4 011 044**

EP 0 779 890 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Technisches Gebiet

Die Erfindung betrifft hydrolysierbare und polyaddierbare Silane, ein Verfahren zu deren Herstellung und deren Verwendung zur Herstellung von organisch modifizierten Kieselsäurepolykondensaten bzw. -heteropolykondensaten sowie zur Herstellung von makromolekularen Massen durch Polyaddition.

Stand der Technik

Hydrolysierbare, organisch modifizierte Silane finden eine breite Anwendung bei der Herstellung kratzfester Beschichtungen für die unterschiedlichsten Substrate, für die Herstellung von Füllstoffen, von Klebe- und Dichtungsmassen oder von Formkörpern. Dabei werden diese Silane entweder alleine, in Mischungen oder in Gegenwart weiterer hydrolysierbarer und/oder kondensierbarer Komponenten hydrolytisch kondensiert, wobei die endgültige Härtung thermisch, photochemisch oder redoxinduziert erfolgt.

So sind z.B. aus der DE 3407087 C2 kratzfeste Beschichtungen bekannt, die durch hydrolytische Kondensation einer Mischung entstehen, die u.a. aus einer hydrolysierbaren Titan- oder Zirkoniumverbindung und aus einem hydrolysierbaren, organofunktionellen Silan $R'_m(R''Y)_nSiX_{(4-m-n)}$ besteht, wobei R' z.B. Alkyl oder Alkenyl ist, R" z.B. Alkylen oder Alkenylen und X einen hydrolysierbaren Rest darstellt.

Aus der DE 3536716 A1 sind z.B. Klebe- und Dichtungsmassen bekannt, die erhalten worden sind durch hydrolytische Kondensation von einem oder mehreren Organosilanen der allgemeinen Formel $R_mSiX_{4-m}$ und gegebenenfalls von einer oder mehreren der Komponenten $SiX_4$ und/oder $R_n(R''Y)_pSiX_{4-n-p}$, wobei R und R" z.B. Alkyl, Alkenyl, Aryl, Alkylaryl, Arylalkyl, Alkenylaryl oder Arylalkenyl, X z.B. Wasserstoff, Halogen, Hydroxy, Alkoxy oder Acyloxy bedeutet, und Y z.B. ein Halogen oder eine gegebenenfalls substituierte Amino-, Amid-, Aldehyd-, Alkylcarbonyl-, Carboxy-, Hydroxy-, Mercapto- oder Cyanogruppe darstellt.

Ferner sind handelsübliche Silane mit reaktiven Doppelbindungen bekannt, wie z.B. (Meth)Acryloxysilane des folgenden Typs,

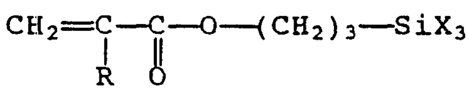

wobei R Wasserstoff oder Methyl bedeutet und X z.B. Halogen oder Alkoxy ist. Diese Silane sind hydrolysier- und polymerisierbar und können für die Herstellung der oben genannten Systeme eingesetzt werden. Sie bieten den großen Vorteil, daß die resultierende Beschichtung, die resultierende Füll-, Klebe- oder Dichtungsmasse oder der resultierende Formkörper durch Polymerisation an den reaktiven Doppelbindungen thermisch, photochemisch oder redoxinduziert gehärtet werden kann.

Handelsübliche Silane mit reaktiven Doppelbindungen, wie z.B. die oben genannten (Meth)Acryloxysilane, stellen im allgemeinen monofunktionelle Verbindungen mit einer C=C-Doppelbindung dar und sind in der Regel niedermolekulare und somit vor der Si-X-Hydrolyse und Kondensation relativ flüchtige Verbindungen, die aufgrund der vorhandenen Acrylgruppe toxikologisch bedenklich sind. Bei der Weiterverarbeitung durch Polymerisation oder modifizierte Funktionalisierung haben diese Silane außerdem den Nachteil, daß aufgrund der Anwesenheit nur einer reaktiven C=C-Doppelbindung lediglich Kettenpolymere erhältlich sind und bei vorheriger Funktionalisierung diese für die organische Polymerisation notwendige C=C-Doppelbindung meist verloren geht. Ferner befindet sich zwischen der Doppelbindung und dem zur Bildung eines anorganischen Netzwerkes befähigten Silicium in der Regel nur eine kurze Kette, so daß die mechanischen Eigenschaften (Flexibilität etc.) über die organischen Gruppen nur in engen Grenzen variierbar sind.

Aus der DE 4011044 C2 sind zwar hydrolysierbare und polymerisierbare Silane bekannt, die über mehr als eine reaktive C=C-Doppelbindung verfügen, und bei denen der Abstand zwischen der reaktiven Doppelbindung und dem zur Bildung eines anorganischen Netzwerkes befähigten Silicium länger ist, aber es besteht immer noch Bedarf an einer Verbesserungen, auch im Hinblick auf eine Funktionalisierung des Moleküls.

Die EP 592934 A2 beschreibt die Herstellung rein organischer Polymere. Sie offenbart die Herstellung hochlichtbrechender Kunststoffe K aus Polythiolen mit mehrfach ungesättigten Monomeren, wobei Thiole (A) mit mindestens 2 Thiolgruppen im Molekül mit Alkylpolythiolestern (B) radikalisch polymerisiert werden, die mindestens 2 mit (Meth) acrylsäure veresterte Thiolgruppen im Molekül besitzen. Die Umsetzung erfolgt unter gleichzeitig verlaufender Polymerisation und Polyaddition. Als Beispiel für ein Thiol wird Pentaerythrittetrathioglykolat angeführt, das sich aus Pentaerythrit mit Thioglykolsäure erhalten lässt.

Aufgabe der vorliegenden Erfindung ist es deshalb, neue, organisch modifizierte Silane bereit zu stellen, die hydrolysier- und polyaddierbar sind, die alleine, in Mischungen oder zusammen mit anderen hydrolysierbaren, kondensierbaren oder polyaddierbaren Komponenten zu kratzfesten Beschichtungen, zu Füll-, Klebe- oder Dichtungsmassen, zu Formkörpern, zu Folien oder Fasern, zu Füllstoffen oder zu Einbettmaterialien verarbeitet werden können. Diese Silane sollen universell einsetzbar sein, und sie sollen in ein anorganisch-organisches Verbundsystem, d.h. in ein anorganisch-organisches Netzwerk eingebaut werden können. Ferner sollen diese Silane schnell und einfach, d. h. ohne aufwendigen Syntheseprozeß herzustellen sein.

Darstellung der Erfindung

Gelöst wird diese Aufgabe durch Silane, die mindestens zwei Thiolgruppen aufweisen und die der allgemeinen Formel I entsprechen.

$$[(HS\text{-}R^5)_nR^6\text{-}S\text{-}E\text{-}R^5]_aSiX_xR^3{}_{4-a-x} \qquad (I)$$

Die Reste und Indices der allgemeinen Formel I sind gleich oder verschieden und haben folgende Bedeutung :

- E = -CO-NH-, -CS-NH-, $-CH_2-CH_2-$ oder $-CH_2-CH(OH)-$
- $R^3$ = Alkyl, Alkenyl, Aryl, Alkylaryl oder Arylalkyl mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;
- $R^5$ = Alkylen, Arylen, Arylenalkylen oder Arylenalkylen mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;
- $R^6$ = Alkylen, Arylen, Arylenalkylen oder Arylenalkylen mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;
- X = Wasserstoff, Halogen, Hydroxy, Alkoxy, Acyloxy, Alkylcarbonyl, Alkoxycarbonyl oder $NR''_2$, mit R" = Wasserstoff, Alkyl oder Aryl;
- a = 1, 2 oder 3;
- n = 2, 3, 4 oder 5;
- x = 1, 2 oder 3;

Die Alkylreste sind z.B. geradkettige, verzweigte oder cyclische Reste mit 1 bis 15, insbesondere mit 1 bis 10 Kohlenstoffatomen und vorzugsweise niedere Alkylreste mit 1 bis 6, besonders bevorzugt mit 1 bis 4 Kohlenstoffatomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 15, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, $SO_3H$ oder $PO_4H_2$.

Unter den Halogenen sind Fluor, Chlor und Brom und insbesondere Chlor bevorzugt.

Für a oder x $\geq$ 2 können die Reste X, $R^3$, $R^5$ und $R^6$ jeweils die selbe oder eine unterschiedliche Bedeutung haben.

Derartige " Oligothiolsilane " sind aus dem Stand der Technik nicht bekannt und eignen sich ganz besonders gut für Thiol-En-Additionen. Die Silane der allgemeinen Formel I sind über die Reste X hydrolytisch kondensierbar und über die Thiolgruppen (poly)addierbar. Über die hydrolytische Kondensation sind sie in ein anorganisches Netzwerk und über die Polyaddition in ein organisches Netzwerk einbaubar. Die Silane der allgemeinen Formel I sind alleine

oder zusammen mit anderen cokondensierbaren Verbindungen nach üblichen Methoden, z.B. über ein Sol-Gel-Verfahren, zu Kieselsäure(hetero)polykondensaten verarbeitbar, die dann anschließend durch Polyaddition (z.B. eine Thiol-En-Addition) vernetzt werden können. Die Silane der allgemeinen Formel I sind aber auch durch Polyaddition, z.B. durch eine Thiol-En-Addition, zu Polyaddukten verarbeitbar, die dann anschließend durch hydrolytische Kondensation weiter verfestigt werden können.

Zum Aufbau des anorganischen Netzwerkes werden die erfindungsgemäßen Silane oder das Polyadditionsprodukt der erfindungsgemäßen Silane, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-Al 2758414, 2758415, 3011761, 3826715 und 3835968 beschrieben ist.

Zum Aufbau des organischen Netzwerkes werden die erfindungsgemäßen Silane bzw. das Polykondensat der erfindungsgemäßen Silane, gegebenenfalls unter Zusatz anderer polyaddierbarer Komponenten, einer Polyaddition unterzogen.

Die erfindungsgemäßen Silane können durch Polyaddition, z.B. an Komponenten mit einer oder mehreren C=C-Doppelbindungen (Thiol-En-Addition) in makromolekulare Massen übergeführt werden. Ebenso ist es möglich, die Polyaddition im Anschluß an die hydrolytische Kondensation der eifindungsgemäßen Silane durchzuführen. Enthält z.B. das zu addierende Olefin mindestens zwei C=C-Doppelbindungen, so ist der Aufbau eines mehrdimensionalen, organischen Netzwerkes möglich. Werden zur Polyaddition z.B. hydrolysierbare Silane herangezogen, die über mindestens eine C=C-Doppelbindung verfügen, so wird bereits dann ein mehrdimensionales Netzwerk aufgebaut, wenn im En-Silan nur eine C=C-Doppelbindung vorhanden ist.

Das allgemeine Reaktionsschema sieht wie folgt aus :

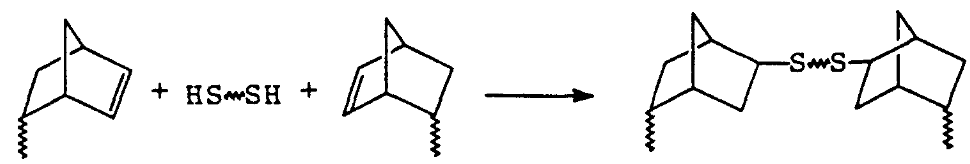

Überraschenderweise wurde gefunden, daß Silane der allgemeinen Formel I ganz besonders gut zur Vernetzung von Silanen der allgemeinen Formel II oder von Polykondensaten aus Silanen der allgemeinen Formel II geeignet sind.

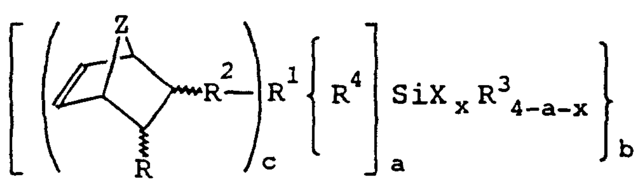

(II)

Die Reste und Indices der allgemeinen Formel II haben folgende Bedeutung:

- R = Wasserstoff, $R^2$-$R^1$-$R^4$-$SiX_xR^3_{3-x}$, Carboxyl-, Alkyl, Alkenyl, Aryl, Alkylaryl oder Arylalkyl mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;
- $R^1$ = Alkylen, Arylen, Arylenalkylen oder Arylenalkylen mit jeweils 0 bis 15 Kohlenstoffatomen, wobei diese Reste durch Sauerstoff- oder Schwefelatome, durch Ester-, Carbonyl-, Amid- oder Aminogruppen unterbrochen sein können;
- $R^2$ = Alkylen, Arylen, Arylenalkylen oder Arylenalkylen mit jeweils 0 bis 15 Kohlenstoffatomen, wobei diese Reste durch Sauerstoff- oder Schwefelatome, durch Ester-, Carbonyl-, Amid- oder Aminogruppen unterbrochen sein können;
- $R^3$ = Alkyl, Alkenyl, Aryl, Alkylaryl oder Arylalkyl mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;
- $R^4$ = $-(CHR^6-CHR^6)_n-$, mit n = 0 oder 1, $-CHR^6-CHR^6-S-R^5-$, $-CO-S-R^5-$, $-CHR^6-CHR^6-NR^6-R^5-$, $-Y-CS-NH-R^5-$, $-S-R^5$, $-Y-CO-NH-R^5-$, $-CO-O-R^5-$, $-Y-CO-C_2H_3(COOH)-R^5-$, $-Y-CO-C_2H_3(OH)-R^5-$ oder $-CO-NR^6-R^5-$;
- $R^5$ = Alkylen, Arylen, Arylenalkylen oder Arylenalkylen mit jeweils 1 bis 15 Kohlenstoffatomen, wobei diese Reste

durch Sauerstoff- oder Schwefelatome, durch Ester-, Carbonyl-, Amid- oder Aminogruppen unterbrochen sein können;

$R^6$ = Wasserstoff, Alkyl oder Aryl mit 1 bis 10 Kohlenstoffatomen

X = Wasserstoff, Halogen, Hydroxy, Alkoxy, Acyloxy, Alkylcarbonyl, Alkoxycarbonyl oder $NR''_2$, mit R" = Wasserstoff, Alkyl oder Aryl;

Y = -O-, -S- oder $-NR^6-$;

Z = -O- oder $-(CHR^6)_m-$, mit m = 1 oder 2;

a = 1, 2 oder 3, mit b = 1 für a = 2 oder 3;

b = 1, 2 oder 3, mit a = 1 für b = 2 oder 3;

c = 1 bis 6;

x = 1, 2 oder 3;

a+x = 2, 3 oder 4.

Die Silane der Formel II sind über die C=C-Doppelbindungen der Norbornen-, Oxabicyclohepten- bzw. Bicyclooctenreste polyaddierbar, z.B. an Thiole, und ringöffnend polymerisierbar, und sie sind und über die Reste X hydrolysierbar. Über die hydrolysierbaren Gruppen kann ein anorganisches Netzwerk mit Si-O-Si-Einheiten aufgebaut werden, während die in den bicyclischen Resten enthaltenen C=C- Doppelbindung unter Aufbau eines organischen Netzwerkes einer Polymerisation bzw. einer Polyaddition unterzogen werden können.

Bei Anwesenheit von zwei oder mehr bicyclischen Resten ist die Ausbildung eines dreidimensionalen, organischen Netzwerkes möglich. Über den Abstand zwischen dem Si-Atom und dem bicyclischen Rest, d.h. über die Kettenlänge, und über die Anwesenheit weiterer funktioneller Gruppen in dieser Kette, können die mechanischen Eigenschaften (z.B. Flexibilität) und die physikalisch-chemischen Eigenschaften (Adsorption, Brechzahl, Haftung etc.) der Poly(hetero)kondensate beeinflußt und den Anforderungen des jeweiligen Anwendungsfalles angepaßt werden. Dabei führen aliphatische Gruppen zu flexiblen und aromatische Gruppen zu starren Produkten. Durch die Anzahl der zur Vernetzung befähigten Gruppen (SH-Gruppen und z.B. Norbornen-Reste) ist die Vernetzungsdichte einstellbar, die dann ebenfalls die Eigenschaften und damit die Einsatzmöglichkeiten der Poly(hetero)kondensate beeinflußt.

Durch die Ausbildung eines anorganischen Netzwerkes können ebenfalls je nach Art und Anzahl der hydrolysierbaren Gruppen (z.B. Alkoxygruppen) silicon- oder glasartige Eigenschaften der Poly(hetero)kondensate eingestellt werden.

Berücksichtigt man dann noch die Variationsmöglichkeiten der cokondensierbaren und copolymerisierbaren bzw. coaddierbaren Komponenten, so wird offenbar, daß über die erfindungsgemäßen Silane Kieselsäure(hetero)polykondensate zur Verfügung gestellt werden, die in vielfältiger Weise an vorgegebene Einsatzgebiete angepaßt werden können, und die deshalb auf allen Gebieten, auf denen bereits bisher Kieselsäure(hetero)polykondensate eingesetzt werden, Verwendung finden können, aber auch neue Verwendungsmöglichkeiten eröffnen, z.B. auf dem Gebiet der Optik, der Elektronik, der Medizin, der Optoelektronik, der Verpackungsmittel für Lebensmittel etc.

Die erfindungsgemäßen Silane, bzw. deren Polykondensate oder Polyaddukte, können entweder als solche verwendet werden oder in Zusammensetzungen, die zusätzlich an den Verwendungszweck angepaßte Additive enthalten, z.B. übliche Lackadditive, Lösungsmittel, Füllstoffe, Photoinitiatoren, thermische Initiatoren, Verlaufsmittel und Pigmente. Die erfindungsgemäßen Silane oder die silanhaltigen Zusammensetzungen eignen sich z.B. zur Herstellung von Beschichtungs-, Füllstoff- oder Bulkmaterialien, von Klebstoffen und Spritzgußmassen, von Fasern, Partikeln, Folien, Haftvermittlern, von Abformmassen und von Einbettmaterialien. Beschichtungen und Formkörper aus den erfindungsgemäßen Silanen haben den Vorteil, daß sie photochemisch strukturierbar sind. Spezielle Anwendungsgebiete sind z.B. die Beschichtung von Substraten aus Metall, Kunststoff, Papier, Keramik etc. durch Tauchen, Gießen, Streichen, Spritzen, elektrostatisches Spritzen, Elektrotauchlackierung etc., der Einsatz für optische, opto-elektrische oder elektronische Komponenten, die Herstellung von Füllstoffen, Fasern oder Folien, die Herstellung von kratzfesten und/oder abriebfesten Korrosionsschutzbeschichtungen, die Herstellung von Formkörpern, z.B. durch Spritzguß, Formgießen, Pressen, Rapid-Prototyping oder Extrusion, die Herstellung von (Contact)Linsen und die Herstellung von Compositen, z.B. mit Fasern, Füllstoffen oder Geweben.

Wege zur Ausführung der Erfindung

Die Silane der allgemeinen Formel I sind gemäß folgenden allgemeinen Reaktionsschemata erhältlich. Dabei werden Oligothiole an Silane addiert, deren organische(r) Rest(e) Isocyanat-, Thioisocyanat- oder Epoxidgruppen oder C=C- Doppelbindungen aufweisen. Derartige Silane sind käuflich erwerbbar oder nach Methoden herstellbar, wie sie z.B. in "Chemie und Technologie der Silicone" (W. Noll, Verlag Chemie GmbH, Wein-heim/Bergstraße, 1968) beschrieben sind.

$$a\,(HS\text{-}R^5)_nR^6\text{-}SH + [OCN\text{-}R^5]_aSiX_xR^3{}_{4\text{-}a\text{-}x} \rightarrow ...$$

$$... \rightarrow [(HS\text{-}R^5)_nR^6\text{-}S\text{-}CO\text{-}NH\text{-}R^5]_aSiX_xR^3{}_{4\text{-}a\text{-}x}$$

$$a\,(HS\text{-}R^5)_nR^6\text{-}SH + [SCN\text{-}R^5]_aSiX_xR^3{}_{4\text{-}a\text{-}x}. \rightarrow ...$$

$$... \rightarrow [(HS\text{-}R^5)_nR^6\text{-}S\text{-}CS\text{-}NH\text{-}R^5]_aSiX_xR^3{}_{4\text{-}a\text{-}x}$$

$$a\,(HS\text{-}R^5)_nR^6\text{-}SH + [H_2\underline{C\text{-}O\text{-}C}H\text{-}R^5]_aSiX_xR^3{}_{4\text{-}a\text{-}x}. \rightarrow ...$$

$$... \rightarrow [(HS\text{-}R^5)_nR^6\text{-}S\text{-}CH_2\text{-}CH(OH)\text{-}R^5]_aSiX_xR^3{}_{4\text{-}a\text{-}x}$$

$$a\,(HS\text{-}R^5)_nR^6\text{-}SH + [H_2C{=}CH\text{-}R^5]_aSiX_xR^3{}_{4\text{-}a\text{-}x}. \rightarrow ...$$

$$... \rightarrow [(HS\text{-}R^5)_nR^6\text{-}S\text{-}CH_2\text{-}CH_2\text{-}R^5]_aSiX_xR^3{}_{4\text{-}a\text{-}x}$$

Ohne Einschränkung der Allgemeinheit ist hierfür ein konkretes Beispiel :

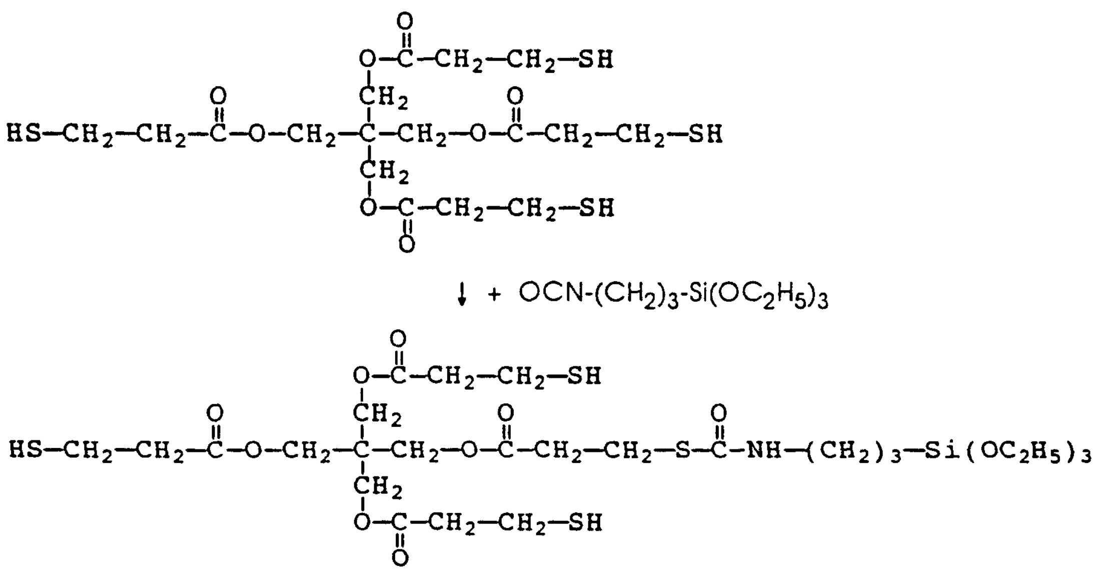


## Patentansprüche

1. Silane der allgemeinen Formel I,

$$[(HS\text{-}R^5)_nR^6\text{-}S\text{-}E\text{-}R^5]_aSiX_xR^3{}_{4\text{-}a\text{-}x} \qquad (I)$$

in der die Reste und Indices gleich oder verschieden sind und folgende Bedeutung haben:

E = -CO-NH-, -CS-NH-, $-CH_2-CH_2-$ oder $-CH_2-CH(OH)-$

$R^3$ = Alkyl, Alkenyl, Aryl, Alkylaryl oder Arylalkyl mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;

$R^5$ = Alkylen, Arylen, Arylenalkylen oder Arylenalkylen mit jeweils 1 bis 15 Kohlenstoffatomen, wobei diese Reste

durch Sauerstoff- oder Schwefelatome, durch Ester-, Carbonyl-, Amid- oder Aminogruppen unterbrochen sein können;

$R^6$ = Alkylen, Arylen, Arylenalkylen oder Arylenalkylen mit jeweils 1 bis 15 Kohlenstoffatomen, wobei diese Reste durch Sauerstoff- oder Schwefelatome, durch Ester-, Carbonyl-, Amid- oder Aminogruppen unterbrochen sein können;

X = Wasserstoff, Halogen, Hydroxy, Alkoxy, Acyloxy, Alkylcarbonyl, Alkoxycarbonyl oder $NR''_2$, mit R" = Wasserstoff, Alkyl oder Aryl;

a = 1, 2 oder 3;

n = 2, 3, 4 oder 5;

x = 1, 2 oder 3;

**2.** Verfahren zur Herstellung der Silane nach Anspruch 1, **dadurch gekennzeichnet, daß** man Oligothiole der allgemeinen Formel $(HS-R^5)_nR^6-SH$ an Silane der allgemeinen Formel $[H_2\underline{C-O-C}H-R^5]_aSiX_xR^3_{4-a-x}$, $[CH_2=CH-R^5]_aSiX_xR^3_{4-a-x}$, $[OCN-R^5]_aSiX_xR^3_{4-a-x}$, oder $[SCN-R^5]_aSiX_xR^3_{4-a-x}$ addiert, wobei die Reste und Indices gleich oder verschieden sind und die in Anspruch 1 genannte Bedeutung haben.

**3.** Verwendung der Silane nach Anspruch 1 für Thiol-En-Polyodditionen.

**4.** Verwendung der Silane nach Anspruch 1 zur Herstellung von organisch modifizierten Kieselsäurepolykondensaten oder von organisch modifizierten Kieselsäureheteropolykondensaten durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/ oder eines Lösungsmittels, durch Einwirkung von Wasser oder von Feuchtigkeit, **dadurch gekennzeichnet, daß** 5 bis 100 Mol-%, auf der Basis monomerer Verbindungen, der hydrolytisch kondensierbaren Verbindungen aus Silanen der allgemeinen Formel I ausgewählt werden,

$$[(HS-R^5)_nR^6-S-E-R^5]_aSiX_xR^3{}_{4-a-x} \qquad (I)$$

in der die Reste und Indices wie in Anspruch 1 definiert sind.

## Claims

**1.** Silanes of the general formula I,

$$[(HS-R^5)_nR^6 -S-E-R^5]_aSiX_xR^3{}_{4-a-x} \qquad (I)$$

in which the radicals and indices are the same or different and have the following meaning:

E = -CO-NH-, -CS-NH-, $-CH_2-CH_2-$ or $-CH_2-CH(OH)-$

$R^3$ = alkyl, alkenyl, aryl, alkylaryl or arylalkyl with respectively 1 to 15 carbon atoms, these radicals being able to be interrupted by oxygen or sulphur atoms, by ester-, carbonyl-, amide- or amino groups;

$R^5$ = alkylene, arylene, arylene alkylene or arylene alkylene with respectively 1 to 15 carbon atoms, these radicals being able to be interrupted by oxygen or sulphur atoms, by ester-, carbonyl-, amide- or amino groups;

$R^6$ = alkylene, arylene, arylene alkylene or arylene alkylene with respectively 1 to 15 carbon atoms, these radicals being able to be interrupted by oxygen or sulphur atoms, by ester-, carbonyl-, amide- or amino groups;

X = hydrogen, halogen, hydroxy, alkoxy, acyloxy, alkylcarbonyl, alkoxycarbonyl or $NR''_2$, with R" = hydrogen, alkyl or aryl;

a = 1, 2 or 3;

n = 2, 3, 4 or 5;

x = 1, 2 or 3.

**2.** Method for producing silanes according to claim 1, **characterised in that** oligothiols of the general formula $(HS-R^5)_nR^6-SH$ are added to silanes of the general formula $[H_2\underline{C-O-C}H-R^5)_aSiX_xR^3_{4-a-x}$, $(CH_2=CH-R^5)_aSiX_xR^3_{4-a-x}$,

$(OCN\text{-}R^5)_aSiX_xR^3_{4\text{-}a\text{-}x}$, or $(SCN\text{-} R^5)_aSiX_xR^3_{4\text{-}a\text{-}x}$, the radicals and indices being the same or different and having the meaning mentioned in claim 1.

**3.** Use of silanes according to claim 1 for thiol-en polyadditions.

**4.** Use of the silanes according to claim 1 to produce organically modified silicic acid polycondensates or organically modified silicic acid heteropolycondensates by hydrolytic condensation of one or more hydrolytically condensable compounds of silicon and possibly of other elements from the group B, Al, P, Sn, Pb, of the transition metals, the lanthanides and the actinides, and/or of precondensates derived from the above-mentioned compounds, possibly in the presence of a catalyst and/or of a solvent, by the effect of water or moisture, **characterised in that** 5 to 100 % by mol on the basis of monomeric compounds of the hydrolytically condensable compounds of silanes of the general formula I are chosen,

$$[(HS\text{-}R^5)_nR^6\text{-}S\text{-}E\text{-}R^5]_aSiX_xR^3{}_{4\text{-}a\text{-}x} \qquad (I)$$

in which the radicals and indices are defined as in claim 1.

## Revendications

**1.** Silanes de formule générale I,

$$[(HS\text{-}R^5)_nR^6\text{-}S\text{-}E\text{-}R^5]_aSiX_xR^3{}_{4\text{-}a\text{-}x} \qquad (I)$$

dans laquelle les restes et les indices de la formule générale I sont identiques ou différents et ont la signification suivante :

E = -CO-NH-, -CS-NH-, $-CH_2\text{-}CH_2\text{-}$ ou $-CH_2\text{-}CH(OH)\text{-}$
$R^3$ = alkyle, alkényle, aryle, alkylaryle ou arylalkyle avec à chaque fois de 1 à 15 atomes de carbone, ces restes pouvant être interrompus par des atomes d'oxygène ou de soufre ou par des groupes ester-, carbonyle, amide, ou amino,
$R^5$ = alkylène, arylène, arylènalkylène ou alkylènarylène ayant chaque fois de 1 à 15 atomes de carbone, ces restes pouvant être interrompus par des atomes d'oxygène ou de soufre, ou par des groupes ester-, carbonyle, amide, ou amino,
$R^6$ = alkylène, arylène, arylènalkylène ou alkylènarylène, ayant respectivement de 1 à 15 atomes de carbone, ces restes pouvant être interrompus par des atomes d'oxygène ou de soufre, par des groupes ester, carbonyle, amide ou amino,
X = hydrogène, halogène, hydroxy, acyloxy, alkylcarbonyle, alkoxycarbonyle ou $NR''_2$, avec R" = hydrogène, un alkyle ou un aryle,
a = 1, 2 ou 3,
n = 2, 3, 4 ou 5,
x = 1, 2 ou 3.

**2.** Procédé de préparation des silanes selon la revendication 1,
**caractérisé en ce qu'**
on additionne des oligothiols de formule générale $(HS\text{-}R^5)_nR^6\text{-}SH$ sur des silanes de formule générale $[H_2\underline{C\text{-}O\text{-}C}H\text{-}R^5]_aSiX_xR^3_{4\text{-}a\text{-}x}$, $[CH2{=}CH\text{-}R^5]_aSiX_xR^3_{4\text{-}a\text{-}x}$, $[OCN\text{-}R^5]_aSiX_xR^3_{4\text{-}a\text{-}x}$ ou $[SCN\text{-}R^5]_aSiX_xR^3_{4\text{-}a\text{-}x}$,
les restes et les indices étant identiques ou différents et ayant les significations mentionnées à la revendication 1.

**3.** Utilisation des silanes selon la revendication 1 pour des additions thiol-Ene.

**4.** Utilisation des silanes selon la revendication 1 pour la production de polycondensats d'acide silicique modifiés organiquement ou d'hétéropolycondensats d'acide silicique modifiés organiquement par condensation hydrolytique de plusieurs composés condensables hydrolytiquement du silicium et le cas échéant d'autres éléments choisis dans le groupe du B, Al, P, Sn, Pb, des métaux de transition, des lanthanides et des actinides, et/ou des précondensats dérivés des composés cités ci-dessus, le cas échéant en présence d'un catalyseur et/ou d'un solvant, par action d'eau ou d'humidité,
**caractérisée en ce que**
5 à 100 % molaire sur la base des composés monomères des composés condensables hydrolytiquement sont choisis parmi les silanes de formule générale I,

$$[(HS-R^5)_nR^6-S-E-R^5]_aSiX_xR^3{}_{4-a-x} \qquad (I)$$

dans laquelle les restes et les indices sont définis comme à la revendication 1.